# EUROPÄISCHE PATENTSCHRIFT

(11) **EP 2 915 469 B1**
(45) Veröffentlichungstag und Bekanntmachung des Hinweises auf die Patenterteilung: **17.04.2019**
(21) Anmeldenummer: 15156042.2
(22) Anmeldetag: 23.02.2015
(51) Int. Cl.: A47J 42/50

(54) **Vorrichtung zur Zuführung von Kaffeebohnen zu einer Mahleinheit**
Device for supplying coffee beans to a grinding unit
Dispositif d'introduction de grains de café dans une unité de mouture

(30) Priorität: 06.03.2014 DE 102014002954
(43) Veröffentlichungstag der Anmeldung: 09.09.2015
(73) Patentinhaber: Melitta Europa GmbH & Co. KG, 32427 Minden (DE); Eugster/Frismag AG, 8580 Amriswil (CH)
(72) Erfinder: Neuhaus, Sven, 32549 Bad Oeynhausen (DE); Schandl, Gerold, 32425 Minden (DE); Riessbeck, Wolfgang, 8597 Landschlacht (CH)
(74) Vertreter: Dantz, Jan Henning

(56) Entgegenhaltungen:
- WO-A2-2010/064902
- DE-C- 524 054
- DE-U1-202008 001 749
- US-A1- 2005 258 287

## Beschreibung

Die vorliegende Erfindung betrifft eine Vorrichtung zur Zuführung von Kaffeebohnen zu einer Mahleinheit, insbesondere für einen Kaffeevollautomaten, nach dem Oberbegriff des Anspruches 1.

Die EP 1 597 991 offenbart einen Kaffeevollautomaten mit einer Mahlvorrichtung, die Kaffeebohnen aus einem Vorratsbehälter bezieht. In dem Vorratsbehälter ist über eine Trennwand eine Unterteilung vorgesehen, so dass unterschiedliche Sorten von Kaffeebohnen in die einzelnen Kammern eingefüllt werden können. Der Benutzer kann dann entscheiden, welche Bohnensorte aus dem Vorratsbehälter für den Brühvorgang in das Mahlwerk abgelassen werden soll. Für eine Auswahl ist eine verschwenkbare Klappe vorgesehen. Solche Vorratsbehälter haben sich an sich bewährt, allerdings besteht der Nachteil, dass die Vorratsbehälter einen großen Raumbedarf besitzen und nur begrenzt flexibel sind, da ein ständiges Nachfüllen nicht erwünscht ist. Durch die gewachsene Vielfalt an Bohnensorten und den Vertrieb von hochwertigen Kaffeesorten in kleineren Mengen besteht ein Bedarf an erhöhter Flexibilität, denn das Bevorraten von Kaffeebohnen in einem Vorratsbehälter führt abhängig von der Lagerzeit zu einem Qualitätsverlust, der gerade bei hochwertigen Kaffeebohnen nicht akzeptabel ist.

Die EP 2 087 820 offenbart einen Kaffeebohnenbehälter für eine Kaffeemühle, bei der zwei Bohnenkammern vorgesehen sind, die jeweils über ein Verschlusselement zu einer Mahleinheit geöffnet und verschlossen werden können. Die Betätigung der Verschlusselemente erfolgt dabei motorisch über eine Steuerung. Auch hier besteht das Problem, dass der Bezug von Kaffeebohnen nur über einen Vorratsbehälter erfolgt.

Die DE 10 2011 085 904 offenbart einen abnehmbaren Bohnenbehälter zum Aufsetzen auf einen Kaffeevollautomaten, bei dem in einer Mantelfläche des Bohnenbehälters eine Abgabeöffnung ausgebildet ist, so dass ein Bezug von Kaffeebohnen aus unterschiedlichen Abteilen des Bohnenbehälters vorgenommen werden kann. Die Abteile dienen dabei zur Bevorratung unterschiedlicher Sorten von Kaffeebohnen, so dass auch hier die oben genannten Probleme auftreten.

Ein weiterer Kaffeebohnenbehälter ist in der DE 20 2008 001 749 U1 gezeigt, die die Merkmale des Oberbegriffes des Anspruches 1 offenbart.

Es ist daher Aufgabe der vorliegenden Erfindung, eine Vorrichtung zur Zuführung von Kaffeebohnen zu einer Mahleinheit zu schaffen, die ein hohes Maß an Flexibilität bereitstellt und eine einfache Handhabung gewährleistet.

Diese Aufgabe wird mit einer Vorrichtung mit den Merkmalen des Anspruches 1 gelöst.

Erfindungsgemäß umfasst die Vorrichtung neben mindestens einem Vorratsbehälter zumindest einen Schacht für Kaffeebohnen, der direkt zu der Mahleinheit führt und zur Aufnahme von Kaffeebohnen für eine oder zwei Brühportionen vorgesehen ist. Dadurch kann der Benutzer wählen, ob Kaffeebohnen von dem Vorratsbehälter bezogen werden sollen oder ob speziell für einen Brühvorgang von einer oder zwei Portionen Kaffeebohnen in den Schacht eingefüllt werden sollen. Dadurch kann bei einem Erwerb spezieller Kaffeebohnen eine Zuführung von frischen Kaffeebohnen zu der Mahleinheit gewährleistet werden, ohne dass ein Aromaverlust durch die Lagerung auftritt.

Der mindestens eine Schacht führt dabei direkt zu der Mahleinheit, wobei eine solche "direkte Verbindung" bedeutet, dass kein Verschlusselement zwischen dem Schacht und der Mahleinheit vorgesehen ist, sondern der Schacht unmittelbar zu der Mahleinheit führt. Dadurch kann der Benutzer nach dem Einfüllen von Kaffeebohnen in den Schacht nicht mehr darauf einwirken, ob die Kaffeebohnen von der Mahleinheit verarbeitet werden.

Der Schacht weist vorzugsweise ein Volumen auf, um zwischen 6 g und 25 g, insbesondere 8 g und 15 g, an Kaffeebohnen aufzunehmen. Dadurch kann der Schacht zu einer kompakten Bauweise beitragen. Für eine Tasse Kaffee können dann aus dem Schacht pro Brühvorgang zwischen 9 g und 13 g, insbesondere zwischen 10 g und 12 g, an Kaffeebohnen bezogen werden.

Der Schacht ist vorzugsweise über eine obere Abdeckung verschließbar. Dabei kann ein Sensor vorgesehen sein, um eine Entnahme oder ein Öffnen der Abdeckung an dem Schacht zu erfassen. Sobald die Abdeckung von dem Schacht abgenommen wurde, kann dann das Verschlusselement zu dem Vorratsbehälter in der Schließstellung verbleiben, damit sichergestellt ist, dass die Mahleinheit ausschließlich Kaffeebohnen aus dem Schacht bezieht.

In einer erfindungsgemäßen Ausgestaltung ist an dem Schacht mindestens ein Sensor zur Erfassung eines Füllstandes von Kaffeebohnen vorgesehen. Zumindest ein Sensor kann an dem Schacht dabei erfassen, ob eine Mindestmenge an Kaffeebohnen für einen Brühvorgang in den Schacht eingefüllt wurde. Dem Benutzer kann über eine Anzeige signalisiert werden, dass eine Befüllung in dem Schacht so lange erfolgen muss, bis die Mindestmenge an Kaffeebohnen eingefüllt ist. Dabei sind an dem Schacht mindestens zwei Sensoren zur Erfassung von unterschiedlichen Füllständen vorgesehen, beispielsweise ein weiterer Sensor am unteren Auslass des Schachtes, um zu detektieren, ob nach einem Abnehmen der oberen Abdeckung an dem Schacht überhaupt Kaffeebohnen in den Schacht eingefüllt wurden. Sollte ein solches Befüllen nicht erfolgt sein und die Abdeckung wieder geschlossen werden, kann die Mahleinheit die Kaffeebohnen wieder aus dem Vorratsbehälter beziehen. Sollte hingegen der ausreichend Schacht befüllt sein, kann das Schließen mit der oberen Abdeckung automatisch den Mahlvorgang einleiten, in dem die Steuerung ein entsprechendes Steuersignal generiert. Alternativ kann auch die Erfassung einer ausreichenden Füllhöhe in dem Schacht den Mahlvorgang unmittelbar einleiten. Dies führt zu dem Vorteil, dass keine weitere Taste durch den Benutzer gedrückt werden muss.

Zudem kann ein Sensor am unteren Ende des Schachtes erfassen, ob der Schacht leegemahlen ist. Dadurch kann über die Sensoren an dem Schacht eine exakte Dosierung von Kaffeemehl erhalten werden.

Vorzugsweise wird die Vorrichtung bei einem Kaffeevollautomaten eingesetzt, bei dem eine Anzeige mit einer Steuerung verbunden ist und die Anzeige Informationen liefert, ob die Mahleinheit Kaffeebohnen von dem Vorratsbehälter oder dem Schacht bezieht.

Das Verschlusselement an dem Vorratsbehälter kann als Schieber ausgebildet sein, der im unteren Bereich des Schachtes vorgesehen ist. Der Schieber kann dabei in vertikale Richtung bewegbar sein, um den Vorratsbehälter zu der Mahleinheit und/oder zu dem Schacht zu öffnen oder zu schließen.

Vorzugsweise ist die obere Abdeckung als Löffel ausgebildet, wobei das Volumen des Löffels so gewählt sein kann, dass im Wesentlichen Kaffeebohnen für einen Brühvorgang eingefüllt werden können.

Die Erfindung wird nachfolgend anhand eines Ausführungsbeispiels mit Bezug auf die beigefügte Zeichnung beschrieben:

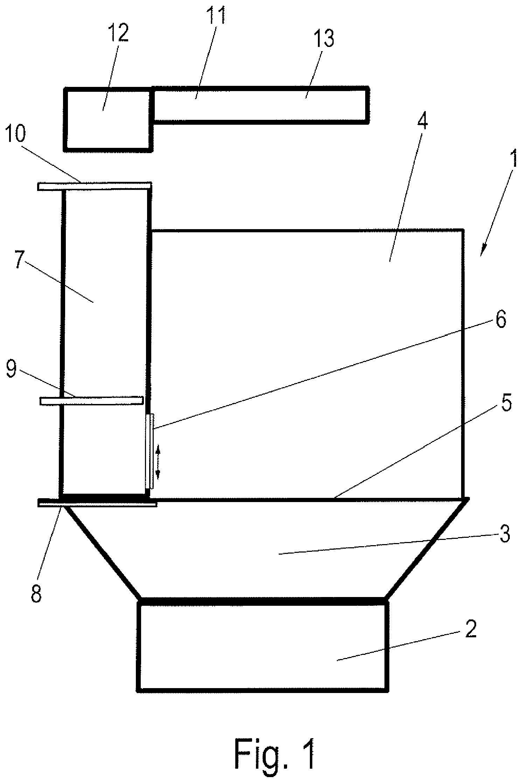

- Figur 1: zeigt schematisch eine Vorrichtung zur Zuführung von Kaffeebohnen zu einer Mahleinheit.

Eine Vorrichtung 1 zur Zuführung von Kaffeebohnen zu einer schematisch dargestellten Mahleinheit 2 umfasst einen Vorratsbehälter 4, in den Kaffeebohnen für eine Vielzahl von Brühvorgängen eingefüllt werden können. Der Vorratsbehälter 4 ist am unteren Ende durch ein Verschlusselement 6 verschlossen, das als vertikaler Schieber ausgebildet ist und über ein Stellelement und eine Steuerung automatisch bewegbar ist. Bei einem geöffneten Verschlusselement 6 können die Kaffeebohnen von dem Vorratsbehälter 4 zu einem Kanal 3 zu der Mahleinheit 2 gefördert werden, so dass die Mahleinheit 2 die gewünschte Menge an Kaffeebohnen aus dem Vorratsbehälter 4 beziehen kann. Ein Boden 5 des Vorratsbehälters 4 ist in Figur 1 horizontal dargestellt, natürlich ist es möglich, den Vorratsbehälter 4 im Bodenbereich trichterförmig oder mit einem schräg angeordneten Boden 5 zu versehen, damit die Kaffeebohnen aus dem Vorratsbehälter 4 zu der Öffnung bzw. dem Verschlusselement 6 nachgleiten können.

Benachbart zu dem Vorratsbehälter 4 ist ein vertikaler Schacht 7 für Kaffeebohnen vorgesehen, der unmittelbar in den Kanal 3 oder die Mahleinheit 2 mündet, ohne dass am unteren Ende des Schachtes 7 ein Verschlusselement vorgesehen ist. Der Schacht 7 ist am oberen Ende durch eine Abdeckung 11 verschlossen, die als Löffel ausgebildet ist. Eine Schaufel 12 der Abdeckung 11 kann somit zum Befüllen des Schachtes 7 verwendet werden, wobei die Schaufel 12 an einem Stiel 13 gehalten ist, um die Handhabung zu vereinfachen.

Der Schacht 7 besitzt dabei ein Volumen, um Kaffeebohnen in einer Menge zwischen 6 g und 25 g, insbesondere 8 g und 15 g, aufzunehmen. Die Schaufel 12 der Abdeckung 11 kann dabei so bemessen sein, dass eine an das Volumen des Schachtes 7 angepasste Menge an Kaffeebohnen in die Schaufel 12 gefüllt werden kann, um die Dosierung zu erleichtern.

An dem Schacht 7 ist am unteren Ende ein erster Sensor 8 vorgesehen, der erfassen kann, ob Kaffeebohnen am Boden des Schachtes 7 vorhanden sind. Durch den Sensor 8 kann dabei eine Restmenge von Kaffeebohnen erkannt werden, um ein Überfüllen zu vermeiden.

Ferner ist ein weiterer Sensor 9 zur Erfassung eines Füllstandes innerhalb des Schachtes 7 vorgesehen. Durch den Sensor 9 wird eine Mindestmenge von Kaffeebohnen erfasst, die notwendig ist, um einen Brühvorgang mit Kaffeebohnen aus dem Schacht 7 einleiten zu können. Sollte der Sensor 9 nach einem Entfernen der Abdeckung 11 und einem Wiederverschließen der Abdeckung 11 keine Mindestfüllmenge detektieren, kann der Bezug von Kaffeebohnen aus dem Vorratsbehälter 4 erfolgen. Dadurch wird sichergestellt, dass bei einem Öffnen und Schließen der Abdeckung 11 ohne einen Füllvorgang die Funktionalität nicht beeinträchtigt wird. Sollte eine ausreichende Füllmenge in dem Schacht 7 detektiert werden, kann dadurch oder durch das Verschließen der Abdeckung automatisch über eine Steuerung der Mahlvorgang eingeleitet werden, um die Handhabung zu vereinfachen. Alternativ könnte der Benutzer den Mahlvorgang auch über eine Starttaste einleiten.

Der Schacht 7 kann dann bei dem Mahlvorgang leergemahlen werden, so dass keine Kaffeebohnen mehr in dem Schacht 7 vorhanden sind. Für den nächsten Brüh- und Mahlvorgang können dann Kaffeebohnen aus dem Vorratsbehälter 4 oder bei einer erneuten Befüllung des Schachtes 7 über den Schacht 7 bezogen werden.

Die Sensoren 8 und 9 können als Lichtschranken oder Lichtsensoren ausgebildet sein, die durch optische Erkennungsmittel eine entsprechende Füllmenge erkennen können. Auch andere Sensoren können zur Erfassung des Füllstandes eingesetzt werden.

Ferner ist im Bereich der Abdeckung 11 ein weiterer Sensor 10 vorgesehen, der erfasst, ob die Abdeckung 11 den Schacht 7 verschließt oder nicht. Beispielsweise kann ein Reed-Sensor eingesetzt werden, der durch die Einfügung der Abdeckung 11 an dem Schacht 7 ein entsprechendes Signal abgibt.

Die durch die Sensoren 8, 9 und 10 erfassten Signale werden an eine Steuerung eines Kaffeevollautomaten abgegeben, damit ein Mahl- und Brühvorgang entsprechend gesteuert werden kann und zudem der Bezug von Kaffeebohnen an einer Anzeige dargestellt werden kann, so dass der Benutzer erfährt, ob Kaffeebohnen aus dem Schacht 7 oder dem Vorratsbehälter 4 bezogen werden.

In dem dargestellten Ausführungsbeispiel ist nur ein Vorratsbehälter 4 neben dem Schacht 7 angeordnet. Es ist natürlich auch möglich, auf der gegenüberliegenden Seite des Schachtes 7 noch einen Vorratsbehälter 4 vorzusehen, so dass der Benutzer nach wie vor die Möglichkeit erhält, zwei unterschiedliche Kaffeesorten in zwei Vorratsbehältern 4 zu bevorraten.

Zudem ist in dem dargestellten Ausführungsbeispiel unterhalb des Schachtes 7 ein Kanal 3 zu der Mahleinheit 2 dargestellt. Dieser Kanal 3 kann optional auch entfallen oder auf ein Minimum verkürzt werden.

### Bezugszeichenliste

- 1: Vorrichtung
- 2: Mahleinheit
- 3: Kanal
- 4: Vorratsbehälter
- 5: Boden
- 6: Verschlusselement
- 7: Schacht
- 8: Sensor
- 9: Sensor
- 10: Sensor
- 11: Abdeckung
- 12: Schaufel
- 13: Stiel

## Patentansprüche

1. Vorrichtung zur Zuführung von Kaffeebohnen zu einer Mahleinheit (1), insbesondere für einen Kaffeevollautomaten, mit mindestens einem Vorratsbehälter (4), der zu der Mahleinheit (2) über ein Verschlusselement (6) verschließbar ist, und von dem Kaffeebohnen bei geöffnetem Verschlusselement (6) zu der Mahleinheit (2) förderbar sind, mit mindestens einem Schacht (7) für Kaffeebohnen, der direkt zu der Mahleinheit (2) führt und zur Aufnahme von Kaffeebohnen für eine oder zwei Brühportionen vorgesehen ist, **dadurch gekennzeichnet, dass** an dem Schacht (7) mindestens zwei Sensoren (8, 9) zur Erfassung von unterschiedlichen Füllständen von Kaffeebohnen vorgesehen sind.

2. Vorrichtung nach Anspruch 1, **dadurch gekennzeichnet, dass** der Schacht (7) ein Volumen aufweist, um zwischen 6 g und 25 g, insbesondere 8 g und 15 g, an Kaffeebohnen aufzunehmen.

3. Vorrichtung nach Anspruch 1 oder 2, **dadurch gekennzeichnet, dass** der Schacht (7) über eine obere Abdeckung (11) verschließbar ist.

4. Vorrichtung nach Anspruch 3, **dadurch gekennzeichnet, dass** ein Sensor (10) vorgesehen ist, um eine Entnahme oder ein Öffnen der Abdeckung (11) an dem Schacht (7) zu erfassen.

5. Vorrichtung nach Anspruch 1, **dadurch gekennzeichnet, dass** über den Sensor (9) an dem Schacht (7) erfasst wird, ob eine Mindestmenge an Kaffeebohnen für einen Brühvorgang in den Schacht (7) eingefüllt wurde.

6. Vorrichtung nach einem der vorhergehenden Ansprüche, **dadurch gekennzeichnet, dass** eine Anzeige vorgesehen ist, die anzeigt, ob die Mahleinheit (2) Kaffeebohnen von dem Vorratsbehälter (4) oder dem Schacht (7) bezieht.

7. Vorrichtung nach einem der vorhergehenden Ansprüche, **dadurch gekennzeichnet, dass** das Verschlusselement (6) an dem Vorratsbehälter (4) als Schieber ausgebildet ist, der im unteren Bereich des Schachtes (7) angeordnet ist.

8. Vorrichtung nach Anspruch 7, **dadurch gekennzeichnet, dass** der Schieber in vertikale Richtung bewegbar ist, um den Vorratsbehälter (4) zu der Mahleinheit (2) und/oder dem Schacht (7) hin zu öffnen oder zu schließen.

9. Vorrichtung nach einem der vorhergehenden Ansprüche, **dadurch gekennzeichnet, dass** beim Verschließen des Schachtes (7) über die obere Abdeckung (11) und einer ausreichenden Befüllung des Schachtes (7) automatisch der Mahlvorgang über eine Steuerung eingeleitet wird.

10. Vorrichtung nach einem der vorhergehenden Ansprüche, **dadurch gekennzeichnet, dass** obere Abdeckung (11) als Löffel ausgebildet ist.

11. Vorrichtung nach einem der vorhergehenden Ansprüche, **dadurch gekennzeichnet, dass** der Schacht (7) im Wesentlichen vertikal ausgerichtet ist.

## Claims

1. Device for supplying coffee beans to a grinding unit (1), particularly for an automatic coffee machine, with at least one storage container (4), which is closable relative to the grinding unit (2) by way of a closure element (6) and from which coffee beans can be conveyed to the grinding unit (2) when the closure element (6) is open, with at least one shaft (7) for coffee beans, which shaft leads directly to the grinding unit (2) and is provided for reception of coffee beans for one or two brews, **characterised in that** at least two sensors (8, 9) for detection of different filling states of coffee beans are provided at the shaft (7).

2. Device according to claim 1, **characterised in that** the shaft (7) has a volume in order to accept between 6 grams and 25 grams, particularly 8 grams and 15 grams, of coffee beans.

3. Device according to claim 1 or 2, **characterised in that** the shaft (7) is closable by way of an upper cover (11).

4. Device according to claim 3, **characterised in that** a sensor (10) is provided in order detect removal or opening of the cover (11) at the shaft (7).

5. Device according to claim 1, **characterised in that** it is detected by way of the sensor (9) at the shaft (7) whether a minimum quantity of coffee beans for a brewing process has been filled into the shaft (7).

6. Device according to any one of the preceding claims, **characterised in that** an indicator is provided which indicates whether the grinding unit (2) draws coffee beans from the storage container (4) or the shaft (7).

7. Device according to any one of the preceding claims, **characterised in that** the closure element (6) at the storage container (4) is formed as a slide arranged in the lower region of the shaft (7).

8. Device according to claim 7, **characterised in that** the slide is movable in vertical direction so as to open or close the storage container (4) towards the grinding unit (2) and/or the shaft (7).

9. Device according to any one of the preceding claims, **characterised in that** in the case of closure of the shaft (7) by way of the upper cover (11) and sufficient filling of the shaft (7) the grinding process is automatically initiated by way of a control.

10. Device according to any one of the preceding claims, **characterised in that** the upper cover (11) is constructed as a scoop.

11. Device according to any one of the preceding claims, **characterised in that** the shaft (7) is oriented substantially vertically.

## Revendications

1. Dispositif permettant de fournir des grains de café à une unité de broyage (2), destiné en particulier à une machine à café totalement automatique, ayant au moins un réservoir de stockage (4) qui peut être fermé vers l'unité de broyage (2) par un élément de fermeture (6), et à partir duquel des grains de café peuvent être transférés vers l'unité de broyage (2) lorsque l'élément de fermeture (6) est ouvert et, ayant une goulotte (7) pour les grains de café qui conduit directement à l'unité de broyage (2) et est prévue pour la réception de grains de café destinés à une ou deux dose(s) infusée(s),
**caractérisé en ce qu'**
il est prévu sur la goulotte (7) au moins deux capteurs (8, 9) permettant de détecter différents niveaux de grains de café.

2. Dispositif conforme à la revendication 1,
**caractérisé en ce que**
la goulotte (7) a un volume permettant de recevoir entre 6 g et 25 g, en particulier entre 8 g et 15 g de grains de café.

3. Dispositif conforme à la revendication 1 ou 2,
**caractérisé en ce que**
la goulotte (7) peut être fermée par un capuchon supérieur (11).

4. Dispositif conforme à la revendication 3,
**caractérisé en ce qu'**
il est prévu un capteur (10) pour permettre de détecter un prélèvement ou une ouverture du capuchon (11) sur la goulotte (7).

5. Dispositif conforme à la revendication 1,
**caractérisé en ce que**
l'on détecte par l'intermédiaire du capteur (9) situé sur la goulotte (7) si une quantité minimum de grains de café a été introduite dans la goulotte (7) pour permettre un processus d'infusion.

6. Dispositif conforme à l'une des revendications précédentes, **caractérisé en ce qu'**
il est prévu un affichage pour indiquer si l'unité de broyage (2) dispose de grains de café provenant du réservoir de stockage (4) ou de la goulotte (7).

7. Dispositif conforme à l'une des revendications précédentes, **caractérisé en ce que**
l'élément de fermeture (6) situé sur le réservoir de stockage (4) est réalisé sous la forme d'un tiroir qui est monté dans la zone inférieure de la goulotte (7).

8. Dispositif conforme à la revendication 7,
**caractérisé en ce que**
le tiroir est mobile en direction verticale pour pouvoir ouvrir ou fermer le réservoir de stockage (4) vers l'unité de broyage (2) et/ou la goulotte (7).

9. Dispositif conforme à l'une des revendications précédentes, **caractérisé en ce que**
lors de la fermeture de la goulotte (7) par l'intermédiaire du capuchon supérieur (11) et lorsque le remplissage de la goulotte (7) est suffisant, le processus de broyage est automatiquement engagé par l'intermédiaire d'une commande.

10. Dispositif conforme à l'une des revendications précédentes, **caractérisé en ce que**
le capuchon supérieur (11) est réalisé sous la forme d'une cuillère.

11. Dispositif conforme à l'une des revendications précédentes, **caractérisé en ce que**
la goulotte (7) est orientée essentiellement verticalement.
